# EUROPEAN PATENT APPLICATION

(11) **EP 4 664 671 A1**
(43) Date of publication of application: **17.12.2025**
(21) Application number: 24913487.5
(22) Date of filing: 29.11.2024
(51) Int. Cl.: H01M 50/609, H01M 50/183, H01M 50/167

(54) **PELLETS FOR ELECTROLYTE INJECTION AND ELECTROLYTE INJECTION METHOD**

(30) Priority: 27.12.2023 KR 20230193120; 11.01.2024 KR 20240004944
(71) Applicant: LG Energy Solution, Ltd., Seoul 07335 (KR)
(72) Inventor: LEE, Ja-Sool, Daejeon 34122 (KR); LEE, Je-Jun, Daejeon 34122 (KR); LEE, Chang-Yong, Daejeon 34122 (KR); JUNG, Ji-Min, Daejeon 34122 (KR)
(74) Representative: Goddar, Heinz J.
(86) International application number: PCT/KR2024/019398
(87) International publication number: WO 2025/143594

(57) **Abstract**

The present disclosure relates to a pellet for electrolyte injection configured to connect between an electrolyte supply device for supplying an electrolyte and an open portion formed on one side of a housing of a battery, the pellet including: a hopper having a hollow structure; and a sealing member including a hopper coupling portion coupled to the hopper and spaced apart from the housing and a battery sealing portion configured to seal the open portion and at least partially spaced apart from the hopper coupling portion.

## Description

### TECHNICAL FIELD

The present disclosure relates to a pellet for electrolyte injection and an electrolyte injection method.

This application is based on and claims priority from Korean Patent Application No. 10-2023-0193120, filed on December 27, 2023, with the Korean Intellectual Property Office, the disclosure of which is incorporated herein in its entirety by reference.

This application is based on and claims priority from Korean Patent Application No. 10-2024-0004944, filed on January 11, 2024, with the Korean Intellectual Property Office, the disclosure of which is incorporated herein in its entirety by reference.

### BACKGROUND ART

An electrolyte may be accommodated together with an electrode assembly in a secondary battery. To manufacture a secondary battery, a method of sealing a housing constituting the secondary battery and then forming a hole to inject an electrolyte may be used, or a method of injecting an electrolyte before sealing the housing and then sealing the housing may be used.

In any of these methods, it is necessary to prevent the electrolyte from leaking to the outside of the secondary battery during a process of injecting the electrolyte. In order to prevent leakage of the electrolyte, sealing a connection portion between the secondary battery and a device for injection needs to be done well.

For example, in the case of a cylindrical secondary battery, an electrode assembly may be inserted through an open portion on a side of a housing and then an electrolyte may be injected. The electrolyte may be injected by inserting one side of a pellet configured to connect between the secondary battery and an electrolyte supply device into the open portion of the housing of the secondary battery and supplying the electrolyte by using the electrolyte supply device connected to the other side of the pellet.

In this case, an end of the pellet inserted into the open portion of the housing may be closely attached to a beading portion formed on the housing. An inner surface of the beading portion formed by press-fitting a circumference of the housing inward may not have a completely flat surface, or another component may be located on the beading portion. Accordingly, even when the end of the pellet is closely attached to the beading portion, there is a possibility that sealing of a connection portion between the pellet and the secondary battery may be incomplete.

An outer diameter or a width of the end of the pellet may be substantially the same as an inner diameter or a width of the housing so that the pellet is closely attached to an inner surface of a side wall of the housing to seal the connection portion. However, when the size of the end of the pellet is increased to enhance sealing, a process of inserting the pellet into the secondary battery may not be easy, and when the size of the end of the pellet is reduced to facilitate insertion of the pellet, sealing may be weakened.

Accordingly, there is a need to develop a pellet for electrolyte injection having a structure that may solve the problems.

### DISCLOSURE

### Technical Problem

The present disclosure is designed to solve the problems of the related art, and therefore the present disclosure is directed to providing a pellet that may facilitate a process of inserting a pellet for electrolyte injection into a battery and may also enhance a sealing property at a connection portion between the pellet and the battery.

However, technical problems to be solved by the present disclosure are not limited to the above-described problems, and other unmentioned problems may be clearly understood by one of ordinary skill in the art from the following description of the present disclosure.

### Technical Solution

In one aspect of the present disclosure, a pellet for electrolyte injection configured to connect between an electrolyte supply device for supplying an electrolyte and an open portion formed on one side of a housing of a battery includes: a hopper having a hollow structure; and a sealing member including a hopper coupling portion coupled to the hopper and spaced apart from the housing and a battery sealing portion configured to seal the open portion and at least partially spaced apart from the hopper coupling portion.

The hopper coupling portion may be closer to the housing as the hopper coupling portion is pressed toward the battery.

The hopper coupling portion may be formed so that an end of the hopper coupling portion is closely attached to an upper end of the housing as the hopper coupling portion is pressed toward the battery.

A separation interval between the hopper coupling portion and the battery sealing portion may at least partially increase outward.

The battery sealing portion may be formed so that an end of the battery sealing portion moves outward and is closely attached to an inner surface of the housing as the battery sealing portion is pressed toward the battery.

An inner diameter or an inner width of the battery sealing portion may increase away from the hopper.

A thickness of the battery sealing portion may decrease away from the hopper.

The battery sealing portion may be formed so that an end of the battery sealing portion slides toward outside of the battery on a beading portion provided in the housing of the battery as the battery sealing portion is pressed toward the battery.

The battery sealing portion may be formed so that an end of the battery sealing portion is closely attached to an inner surface of the housing above the beading portion as the battery sealing portion is pressed toward the battery.

The battery sealing portion may be formed so that an end of the battery sealing portion is closely attached to a top surface of a current collector located on a beading portion as the battery sealing portion is pressed toward the battery.

In another aspect of the present disclosure, an electrolyte injection method of injecting an electrolyte into a battery through an open portion formed on one side of a housing of the battery includes: an insertion step of inserting a pellet for electrolyte injection into the open portion; a seating step of seating a sealing member provided in the pellet on a beading portion provided in the housing; a sealing step of pressing a hopper coupling portion of the sealing member toward the beading portion to closely attach the hopper coupling portion to an upper end of the housing; and an injection step of injecting an electrolyte into the housing through the pellet.

The sealing step may include a close contact step in which as the hopper coupling portion is pressed toward the beading portion, an end of a battery sealing portion of the sealing member moves outward and is closely attached to an inner surface of the housing.

The close contact step may include allowing the end of the battery sealing portion of the sealing member to slide toward outside of the battery on the beading portion so that the end of the battery sealing portion is closely attached to the inner surface of the housing.

### Advantageous Effects

According to an aspect of the present disclosure, because an upper end of a battery is sealed by using the load of a pellet in a process of inserting the pellet for electrolyte injection into the battery, sealing at a connection portion between the pellet and the battery may be more easily enhanced.

Also, according to another aspect of the present disclosure, because an outer surface of a battery sealing portion and an inner surface adjacent to an end of a battery housing are closely attached, leakage of an electrolyte flowing toward an open portion of the battery housing along a beading portion of the battery housing may be effectively prevented.

Also, according to another aspect of the present disclosure, because a battery sealing portion double-seals an upper end and an inner surface of a battery housing, leakage of an electrolyte during electrolyte injection into a battery may be effectively prevented.

The present disclosure may have various other effects, which will be described in each embodiment, or descriptions of effects that may be easily inferred by one of ordinary skill in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view illustrating a state before a pellet is connected to a battery according to an embodiment of the present disclosure.
FIG. 2 is a view illustrating a state where a pellet is connected to a battery according to an embodiment of the present disclosure.
FIG. 3 is a perspective view illustrating a sealing member according to an embodiment of the present disclosure.
FIG. 4 is a cross-sectional view illustrating a sealing member according to an embodiment of the present disclosure.
FIG. 5 is a cross-sectional view illustrating a connection structure between a sealing member and a battery according to an embodiment of the present disclosure.
FIG. 6 is a cross-sectional view illustrating a state where a sealing member is pressed toward a battery according to an embodiment of the present disclosure.
FIG. 7 is an enlarged view illustrating a portion A of FIG. 6.
FIG. 8 is a cross-sectional view illustrating a connection structure between a sealing member and a battery according to another embodiment of the present disclosure.
FIG. 9 is an enlarged view illustrating a portion B of FIG. 8.
FIG. 10 is a view illustrating a connection structure between a sealing member and a battery including a current collector according to an embodiment of the present disclosure.
FIG. 11 is an enlarged view illustrating a portion C of FIG. 10.
FIG. 12 is a plan view illustrating a battery including a current collector.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

Also, the present disclosure includes various embodiments. A repeated description of components substantially the same as or similar to those of previous embodiments will be omitted, and a difference will be mainly described.

The size of each element or a specific portion of the element shown in the drawings may be exaggerated, omitted or schematically illustrated for the purpose of convenience and clarity of explanation. Accordingly, the size of each element may not substantially reflect its actual size. While describing the present disclosure, detailed descriptions of related well-known functions or configurations that may blur the points of the present disclosure are omitted. For reference, in the specification, the terms indicating directions are terms based on elements shown in the accompanying drawings, and are relative terms that may vary according to postures or positions of actual elements.

It will be understood by one of ordinary skill in the art that when terms indicating directions such as upper, lower, left, right, front, and rear are used, these terms are only for convenience of explanation and may vary according to a position of a target object, a position of an observer, etc.

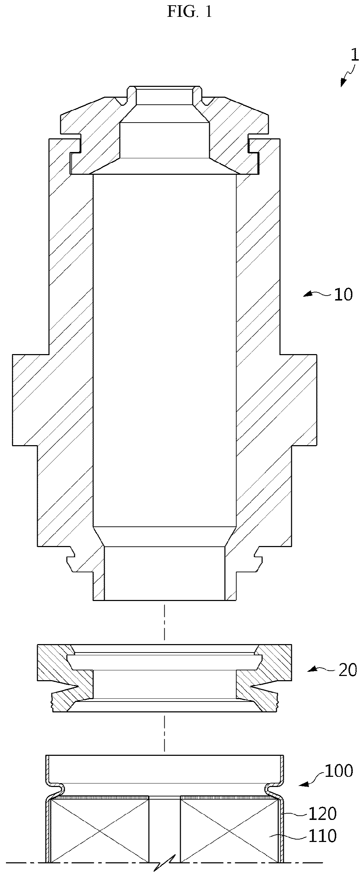

A pellet 1 according to an embodiment of the present disclosure will be described with reference to FIGS. 1 to 4.

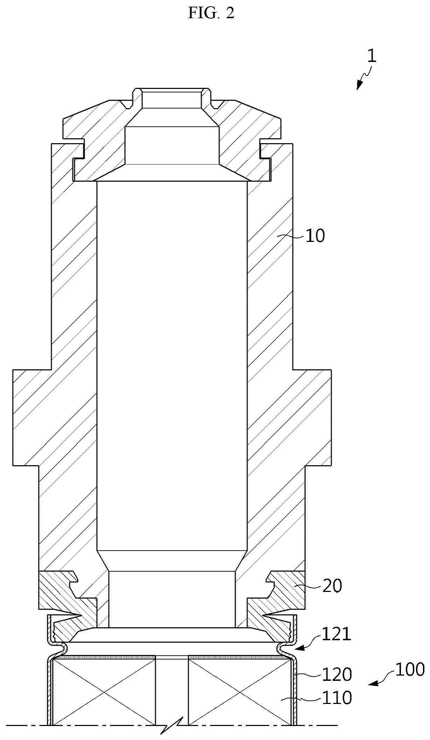

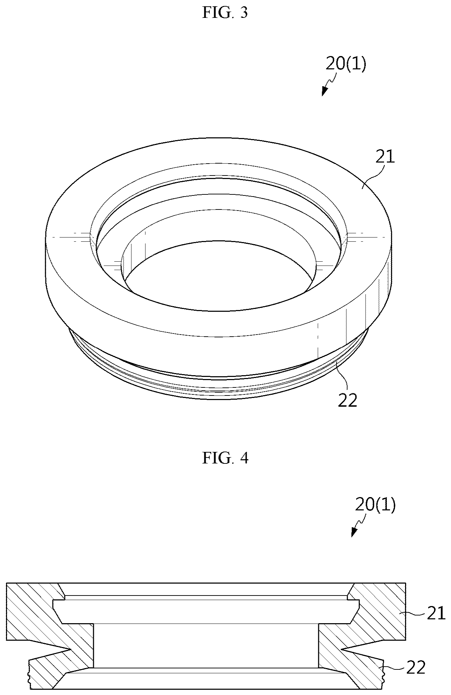

FIG. 1 is a view illustrating a state before a pellet is connected to a battery according to an embodiment of the present disclosure. FIG. 2 is a view illustrating a state where a pellet is connected to a battery according to an embodiment of the present disclosure. Also, FIG. 3 is a perspective view illustrating a sealing member according to an embodiment of the present disclosure. FIG. 4 is a cross-sectional view illustrating a sealing member according to an embodiment of the present disclosure.

Referring to FIGS. 1 to 4, the pellet 1 according to an embodiment of the present disclosure may be a pellet for electrolyte injection configured to connect an electrolyte supply device for supplying an electrolyte to a battery 100.

In the present disclosure, the battery 100 to which an electrolyte is injected may include an electrode assembly 110 and a housing 120. The battery 100 may be a secondary battery that may be charged and discharged. The battery 100 may be, for example, a cylindrical battery.

The electrode assembly 110 may be formed by winding a stack including a first electrode, a second electrode, and a separator. Also, the housing 120 may include an open portion to accommodate the electrode assembly 110. The open portion may be formed at an upper end of the housing 120. The housing 120 may include a conductive metal. The housing 120 may be electrically connected to the second electrode of the electrode assembly 110.

The pellet 1 according to an embodiment of the present disclosure may be a pellet for electrolyte injection configured to connect between the electrolyte supply device for supplying an electrolyte and the open portion formed on one side of the housing 120 of the battery 100.

The pellet 1 may include a hopper 10 and a sealing member 20. The hopper 10 may have a hollow structure through which an electrolyte supplied by the electrolyte supply device may pass. That is, the hopper 10 may function as a connector for connecting the electrolyte supply device to the battery 100 during electrolyte injection. The hopper 10 may include a metal material to ensure rigidity. However, a material of the hopper 10 is not limited thereto, and any material that maintains appropriate rigidity and has chemical resistance to an electrolyte passing through the hopper 10 may be applied to the hopper 10.

The sealing member 20 may be coupled to the hopper 10 and configured to seal the battery 100 during electrolyte injection. The sealing member 20 may be configured to seal an open portion of the battery 100.

The sealing member 20 may include a flexible material in order to prevent leakage of an electrolyte at a coupling portion between the hopper 10 and the sealing member 20 and a contact portion between the sealing member 20 and the battery 100. The sealing member 20 may include, for example, a rubber material. The sealing member 20 may have a hollow structure whose inner space may communicate with an inner surface of the hopper 10. The sealing member 20 may have a substantially cylindrical shape with an empty center.

In more detail, the sealing member 20 may include a hopper coupling portion 21 and a battery sealing portion 22. The hopper coupling portion 21 may be coupled to the hopper 10. The hopper coupling portion 21 may have a shape corresponding to one end of the hopper 10. The hopper coupling portion 21 may surround an outer surface of one end of the hopper 10. Also, the hopper coupling portion 21 may be pressed toward the battery 100 by the hopper 10. Referring to FIG. 2, the hopper 10 may contact an upper end of the hopper coupling portion 21.

Also, the hopper coupling portion 21 may be spaced apart from the housing 120. In detail, referring to FIG. 2, a lower end of the hopper coupling portion 21 may be spaced apart upward from the open portion of the housing 120. An outer circumference of the hopper coupling portion 21 may be greater than an outer circumference of the housing 120. The hopper coupling portion 21 may contact the upper end of the housing 120 during electrolyte injection.

The battery sealing portion 22 may be configured to seal the open portion of the housing 120. The battery sealing portion 22 may have a shape corresponding to one end of the housing 120. The battery sealing portion 22 may be at least partially spaced apart from the hopper coupling portion 21. That is, a groove may be formed along an outer circumference of an outer surface of the sealing member 20. The battery sealing portion 22 may be closely attached to an inner surface of the housing 120 of the battery 100 during electrolyte injection.

According to the embodiment of the present disclosure, when an electrolyte is injected into the battery 100, the sealing member 20 may double-seal the upper end and the inner surface of the housing 120 at the same time. Accordingly, a sealing property at a connection portion between the pellet 1 and the battery 100 may be improved. Accordingly, according to the embodiment of the present disclosure, a risk of electrolyte leakage to the outside of the battery 100 in a process of injecting an electrolyte into the battery may be minimized.

Also, when the pellet 1 does not operate, the sealing member 20 may be hardened. According to the embodiment of the present disclosure, because the hopper coupling portion 21 seals the housing 120 by pressing the upper end of the housing 120, a sealing property of the battery 100 may be secured even when the sealing member 20 is hardened. Accordingly, the efficiency of an electrolyte injection process may be improved.

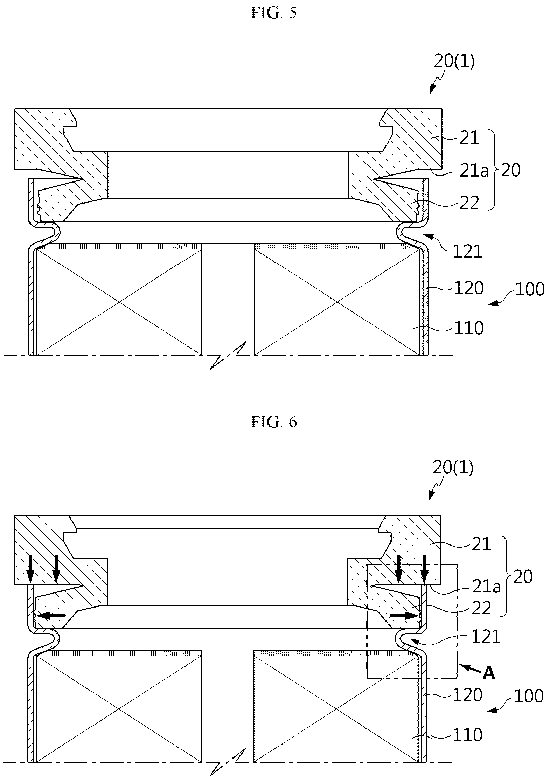

Next, a shape change when the sealing member 20 of the present disclosure is pressed toward the battery 100 will be described in more detail with reference to FIGS. 5 to 7.

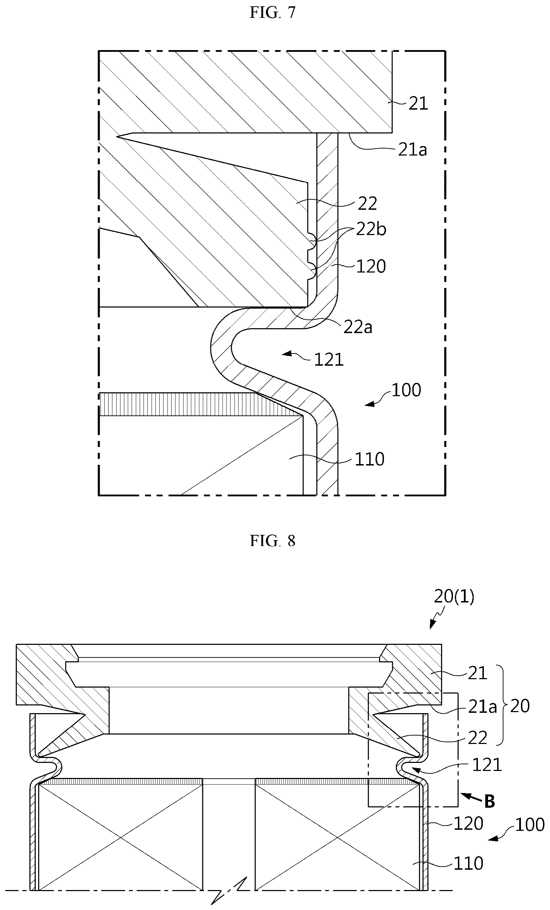

FIG. 5 is a cross-sectional view illustrating a connection structure between a sealing member and a battery according to an embodiment of the present disclosure. Also, FIG. 6 is a cross-sectional view illustrating a state where a sealing member is pressed toward a battery according to an embodiment of the present disclosure. FIG. 7 is an enlarged view illustrating a portion A of FIG. 6.

The hopper coupling portion 21 may be closer to the housing 120 as the hopper coupling portion 21 is pressed toward the battery 100. Furthermore, as the hopper coupling portion 21 is pressed toward the battery 100, an end 21a of the hopper coupling portion 21 may be closely attached to an upper end of the housing 120. In this case, the end 21a of the hopper coupling portion 21 may refer to a portion facing the housing 120. Alternatively, the end 21a of the hopper coupling portion 21 may refer to an outer lower end of the hopper coupling portion 21. Alternatively, the end 21a of the hopper coupling portion 21 may refer to an outer lower surface of the hopper coupling portion 21.

According to the embodiment of the present disclosure, the hopper coupling portion 21 may press the upper end of the housing 120 to seal the housing 120. Accordingly, a sealing property at a connection portion between the pellet 1 and the battery 100 may be improved. Accordingly, according to the embodiment of the present disclosure, a risk of electrolyte leakage to the outside of the battery 100 in a process of injecting an electrolyte into the battery may be minimized.

A separation interval between the hopper coupling portion 21 and the battery sealing portion 22 may at least partially increase outward. In other words, the end 21a of the hopper coupling portion 21 may be at least partially inclined upward. Also, an outer upper surface of the battery sealing portion 22 may be at least partially inclined downward.

According to the embodiment of the present disclosure, because the hopper coupling portion 21 is inclined upward toward the outside, the end 21a of the hopper coupling portion 21 may be more closely attached to the upper end of the housing 120 as the hopper coupling portion 21 is pressed toward the battery 100. Also, because a pressing force applied to the hopper coupling portion 21 by the hopper 10 is easily transmitted to the battery sealing portion 22, the battery sealing portion 22 may better seal an open portion of the battery 100.

Referring to FIGS. 6 and 7, as the battery sealing portion 22 is pressed toward the battery 100, an end 22a of the battery sealing portion 22 may move outward and may be closely attached to an inner surface of the housing 120. The end 22a of the battery sealing portion 22 may refer to a portion located on an outer side of the battery sealing portion 22.

According to the embodiment of the present disclosure, an outer surface of the battery sealing portion 22 may be closely attached to the inner surface of the housing 120. Accordingly, when an electrolyte is injected into the battery 100, leakage of the electrolyte along the inner surface of the housing 120 may be effectively prevented.

Also, the end 22a of the battery sealing portion 22 may be closely attached to a beading portion 121 as the battery sealing portion 22 is pressed toward the battery 100. According to the embodiment of the present disclosure, because the battery sealing portion 22 is closely attached to the beading portion 121, a sealing force between the beading portion 121 and the battery sealing portion 22 may be secured. Accordingly, leakage of an electrolyte along the beading portion 121 of the housing 120 to the open portion of the housing 120 may be effectively prevented.

Referring to FIG. 7, the battery sealing portion 22 may include a protrusion 22b. The protrusion 22b may be formed on the outer surface of the battery sealing portion 22. The protrusion 22b may be formed on a portion of the battery sealing portion 22 contacting the housing 120. The protrusion 22b may protrude toward the housing 120.

The protrusion 22b may protrude outward along a radial direction of the housing 120. The protrusion 22b may extend along a circumference of the housing 120. A plurality of protrusions 22b may be provided. The plurality of protrusions 22b may be spaced apart from each other along a height direction of the battery sealing portion 22. The plurality of protrusions 22b may be arranged at equal intervals along the height direction of the battery sealing portion 22.

According to the configuration of the present disclosure, the protrusion 22b may increase a contact area with the housing 120. Also, because the protrusion 22b protrudes toward the housing 120, a frictional force with the housing 120 may increase. Accordingly, because the protrusion 22b may further enhance a sealing force of the battery sealing portion 22 inserted into the housing 120, leakage of an electrolyte toward the open portion of the housing 120 may be effectively prevented.

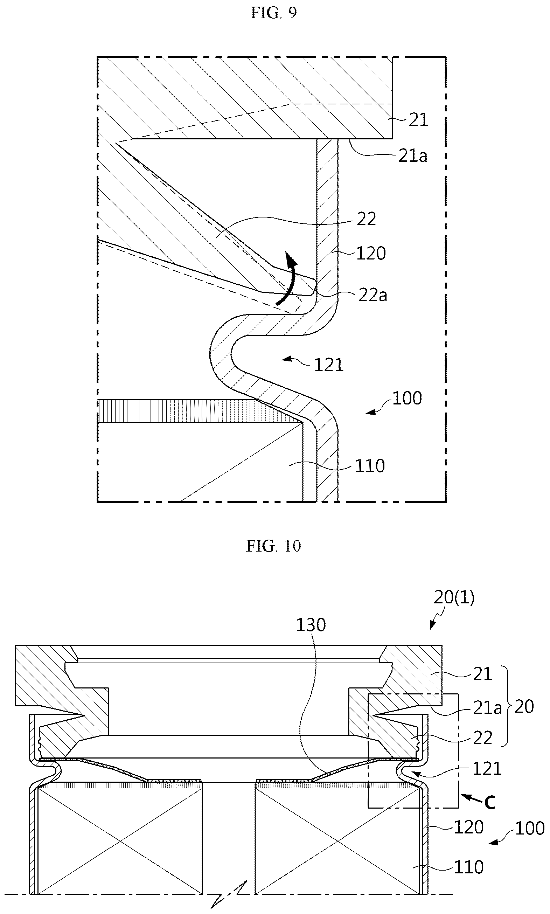

FIG. 8 is a cross-sectional view illustrating a connection structure between a sealing member and a battery according to another embodiment of the present disclosure. FIG. 9 is an enlarged view illustrating a portion B of FIG. 8.

According to another embodiment of the present disclosure, as the battery sealing portion 22 is pressed toward the battery 100, the end 22a of the battery sealing portion 22 may be deformed outward and may be closely attached to an inner surface of the housing 120.

For example, as shown in the embodiment of FIGS. 8 and 9, an inner diameter or an inner width of the battery sealing portion 22 may increase away from the hopper 10. A thickness of the battery sealing portion 22 may decrease away from the hopper 10.

When such an inner diameter increasing structure of the battery sealing portion 22 and/or such a thickness decreasing structure of the battery sealing portion 22 is applied, as the sealing member 20 is pressed toward the battery 100, an end of the battery sealing portion 22 may be flexibly deformed and may be well closely attached to the inner surface of the housing 120 of the battery 100. Accordingly, a risk of electrolyte leakage in a process of injecting an electrolyte into the battery 100 may be removed or reduced.

In more detail, a shape change when the sealing member 20 is pressed toward the battery 100 will be described with reference to FIG. 9. As the battery sealing portion 22 is pressed toward the battery 100, the end 22a of the battery sealing portion 22 may slide toward the outside of the battery 100 on the beading portion 121 provided in the housing 120 of the battery 100. Also, as the battery sealing portion 22 is pressed toward the battery 100, the end 22a of the battery sealing portion 22 may be closely attached to the inner surface of the housing 120 above the beading portion 121.

An inner surface of the beading portion 121 formed by press-fitting a circumference of the housing 120 of the battery 100 inward may not be a complete flat surface, and another component may be located on the beading portion 121. Accordingly, even when the end 22a of the battery sealing portion 22 is closely attached to the beading portion 121, there is a possibility that sealing at a contact interface between the battery sealing portion 22 and the beading portion 121 is incomplete. Accordingly, when the end 22a of the battery sealing portion 22 slides toward the outside of the battery 100 on the beading portion 121 and is closely attached to the inner surface 120 above the beading portion 121 as described above, a sealing property may be further improved.

Such a movement of the battery sealing portion 22 when the pellet 1 is pressed toward the battery 100 may be obtained, for example, by the inclined structure of the end 21a of the hopper coupling portion 21 and/or the inner diameter increasing structure of the battery sealing portion 22 and/or the thickness decreasing structure of the battery sealing portion 22 as described above.

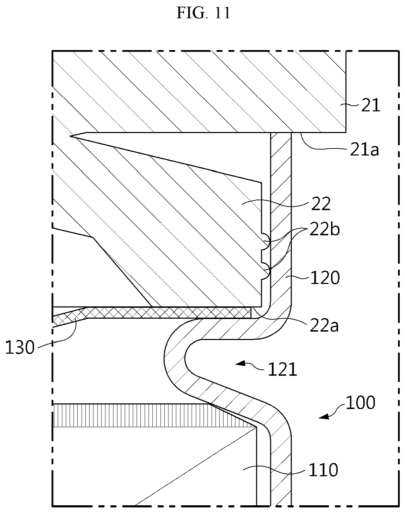

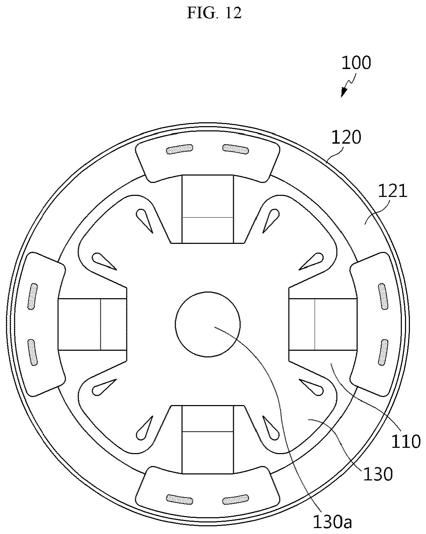

FIG. 10 is a view illustrating a connection structure between a sealing member and a battery including a current collector according to an embodiment of the present disclosure. FIG. 11 is an enlarged view illustrating a portion C of FIG. 10. Also, FIG. 12 is a plan view illustrating a battery including a current collector.

Referring to FIGS. 10 to 12, the pellet 1 of the present disclosure may be applied to the battery 100 including, for example, a current collector 130. Referring to FIG. 12, the current collector 130 may be electrically connected to the electrode assembly 110. The current collector 130 may be coupled to an uncoated portion 111 provided on one surface of the electrode assembly 110. The current collector 130 may be located on the beading portion 121 of the housing 120.

Also, the current collector 130 may have a current collector hole 130a. The current collector hole 130a may be formed at substantially the center of the current collector 130. The current collector hole 130a may be formed at a position corresponding to a winding center hole of the electrode assembly 110.

As the battery sealing portion 22 is pressed toward the battery 100, the end 22a of the battery sealing portion 22 may be closely attached to a top surface of the current collector 130. As the hopper coupling portion 21 is closely attached to an upper end of the housing 120, the end 22a of the battery sealing portion 22 may also be more closely attached to the top surface of the current collector 130.

When the current collector 130 is disposed on the beading portion 121 of the housing 120, an uneven structure may be formed on a top surface of the beading portion 121 due to the current collector 130. Also, when the current collector 130 is welded to the beading portion 121, a flatness of the top surface of the beading portion 121 may be further reduced due to welding beads.

Referring to FIG. 12, for example, the current collector 130 may be discontinuously disposed on the beading portion 121 along a circumferential direction of the housing 120. When the battery 100 has such as structure, a flatness on the beading portion 121 may be further reduced.

As such, when a flatness on the top surface of the beading portion 121 is low, if sealing at a connection portion between the pellet 1 and the battery 100 is to be realized by closely attaching the battery sealing portion 22 to the beading portion 121, a sealing property may be degraded and leakage of an electrolyte may occur during an injection process.

Accordingly, the end 22a of the battery sealing portion 22 according to an embodiment of the present disclosure may be formed to match an upper shape of the beading portion 121 due to the current collector 130 discontinuously disposed along the circumferential direction on the beading portion 121.

According to the embodiment of the present disclosure, when the end 22a of the battery sealing portion 22 provides a pressing force toward the beading portion 121 as the hopper coupling portion 21 is closely attached to the upper end of the housing 120, an adhesive force between the end 22a of the battery sealing portion 22 and the top surface of the current collector 130 may be increased, thereby securing a more improved sealing property.

Next, an electrolyte injection method according to an embodiment of the present disclosure will be described. The electrolyte injection method of the present disclosure will be described with reference to FIGS. 1 to 12 of the present disclosure.

The electrolyte injection method of the present disclosure relates to a method of injecting an electrolyte into the battery 100 through an open portion formed on one side of the housing 120 of the battery 100 and may include an insertion step, a seating step, a sealing step, and an injection step.

The insertion step may be a step of inserting the pellet 1 for electrolyte injection into the open portion of the housing 120. The seating step may be a step of seating the sealing member 20 provided in the pellet 1 on the beading portion 121 provided in the housing 120. The sealing step may be a step of pressing the hopper coupling portion 21 of the sealing member 20 toward the beading portion 121 to closely attach the hopper coupling portion 21 to an upper end of the housing 120. The injection step may be a step of injecting an electrolyte into the housing 120 through the pellet 1.

The sealing step may include a close contact step. The close contact step may be a step in which as the hopper coupling portion 21 is pressed toward the beading portion 121, the end 22a of the battery sealing portion 22 of the sealing member 20 moves outward and is closely attached to an inner surface of the housing 120.

In the close contact step, the end 22a of the battery sealing portion 22 of the sealing member 20 may slide toward the outside of the battery 100 on the beading portion 121 so that the end 22a of the battery sealing portion 22 is closely attached to the inner surface of the housing 120.

While the present disclosure has been particularly shown and described with reference to exemplary embodiments thereof, it will be understood by one of ordinary skill in the art that various changes in form and details may be made therein without departing from the scope of the present disclosure. Accordingly, the scope of the present disclosure is defined by the following claims described to include examples of many such variations.

## Claims

1. A pellet for electrolyte injection configured to connect between an electrolyte supply device for supplying an electrolyte and an open portion formed on one side of a housing of a battery, the pellet comprising:
a hopper having a hollow structure; and
a sealing member comprising a hopper coupling portion coupled to the hopper and spaced apart from the housing and a battery sealing portion configured to seal the open portion and at least partially spaced apart from the hopper coupling portion.

2. The pellet according to claim 1, wherein the hopper coupling portion is closer to the housing as the hopper coupling portion is pressed toward the battery.

3. The pellet according to claim 1, wherein the hopper coupling portion is formed so that an end of the hopper coupling portion is closely attached to an upper end of the housing as the hopper coupling portion is pressed toward the battery.

4. The pellet according to claim 1, wherein a separation interval between the hopper coupling portion and the battery sealing portion at least partially increases outward.

5. The pellet according to claim 1, wherein the battery sealing portion is formed so that an end of the battery sealing portion moves outward and is closely attached to an inner surface of the housing as the battery sealing portion is pressed toward the battery.

6. The pellet according to claim 1, wherein an inner diameter or an inner width of the battery sealing portion increases away from the hopper.

7. The pellet according to claim 1, wherein a thickness of the battery sealing portion decreases away from the hopper.

8. The pellet according to claim 1, wherein the battery sealing portion is formed so that an end of the battery sealing portion slides toward outside of the battery on a beading portion provided in the housing of the battery as the battery sealing portion is pressed toward the battery.

9. The pellet according to claim 8, wherein the battery sealing portion is formed so that an end of the battery sealing portion is closely attached to an inner surface of the housing above the beading portion as the battery sealing portion is pressed toward the battery.

10. The pellet according to claim 1, wherein the battery sealing portion is formed so that an end of the battery sealing portion is closely attached to a top surface of a current collector located on a beading portion as the battery sealing portion is pressed toward the battery.

11. An electrolyte injection method of injecting an electrolyte into a battery through an open portion formed on one side of a housing of the battery, the electrolyte injection method comprising:
an insertion step of inserting a pellet for electrolyte injection into the open portion;
a seating step of seating a sealing member provided in the pellet on a beading portion provided in the housing;
a sealing step of pressing a hopper coupling portion of the sealing member toward the beading portion to closely attach the hopper coupling portion to an upper end of the housing; and
an injection step of injecting an electrolyte into the housing through the pellet.

12. The electrolyte injection method according to claim 11, wherein the sealing step comprises a close contact step in which as the hopper coupling portion is pressed toward the beading portion, an end of a battery sealing portion of the sealing member moves outward and is closely attached to an inner surface of the housing.

13. The electrolyte injection method according to claim 12, wherein the close contact step comprises allowing the end of the battery sealing portion of the sealing member to slide toward outside of the battery on the beading portion so that the end of the battery sealing portion is closely attached to the inner surface of the housing.
